# EUROPÄISCHE PATENTSCHRIFT

(11) **EP 1 967 965 B1**
(45) Veröffentlichungstag und Bekanntmachung des Hinweises auf die Patenterteilung: **12.09.2012**
(21) Anmeldenummer: 07004431.8
(22) Anmeldetag: 05.03.2007
(51) Int. Cl.: G06F 17/30

(54) **Verfahren zum Ermitteln von Informationen aus einer Datenbank**
Method for acquiring information from a database
Procédé destiné à la détermination d'informations provenant d'une base de données

(43) Veröffentlichungstag der Anmeldung: 10.09.2008
(73) Patentinhaber: Avaya GmbH & Co. KG, 60326 Frankfurt am Main (DE)
(72) Erfinder: Doll, Armin, 81739 München (DE)
(74) Vertreter: Tergau & Walkenhorst

(56) Entgegenhaltungen:
- EP-A- 1 659 506
- WO-A-00/52553
- US-A1- 2002 152 429
- US-A1- 2003 041 280
- US-A1- 2004 249 682
- US-A1- 2006 161 541

## Beschreibung

Die Erfindung bezieht sich auf ein Verfahren zum Ermitteln von Informationen aus einer Datenbank, die in Form von von einem Benutzer vorgebbaren Anfragen zugeordneten Anfrageergebnissen in einem flüchtigen Speicher einer Kontrolleinheit zum Auslesen durch den Benutzer bereitgehalten werden, wobei die bearbeiteten Anfragen gemeinsam mit einem Verweis auf die ihnen zugeordneten Ergebnisse ebenfalls im flüchtigen Speicher vorgehalten werden.

Computernetzwerke mit angeschlossenen Datenbanken verfügen üblicherweise über einen so genannten Proxy-Server, auch nur Proxy genannt, welcher die von einem Benutzer angefragten Informationen aus der Datenbank verarbeitet und das Ergebnis der Anfrage an den Benutzer übersendet.

Der Proxy-Server ist dabei ein Systembaustein oder ein Dienstprogramm, das im Datenverkehr vermittelt. Es macht den Datentransfer sowohl effizienter als auch schneller, kann aber auch die Sicherheit erhöhen. Proxy-Server beinhalten in üblicher Verwendungsart einen zugeordneten, flüchtigen Speicher, einen so genannten Cache. Dieser hat u. a. die Eigenschaft, dass er im Vergleich zu der Datenbank über eine weitaus schnellere Zugriffszeit verfügt. In diesem Speicher werden an den Proxy gestellte Anfragen mit deren Ergebnissen und Systeminformationen gespeichert. Wird die gleiche Anfrage an den Proxy-Server erneut gestellt, kann diese aus dem flüchtigen Speicher beantwortet werden, ohne zuerst die Anfrage an die Datenbank erneut ausführen zu müssen. Durch das Hinterlegen der Abfragen mit ihren Ergebnissen im flüchtigen Speicher können Anfragen schneller beantwortet werden, und die Netzlast wird durch die verminderten Zugriffe auf die Datenbank verringert.

Anwendung finden solche Proxy-Server sowohl in einzelnen privaten Computersystemen, wie beispielsweise bei der Vermittlung von Datenanfragen aus dem Internet beim Aufrufen einer Homepage, als auch in größeren, eher geschäftlich orientierten Computernetzwerken bei der Anbindung an lokal installierten Datenbanken wie beispielsweise einer Kundenstammdatenbank. Solche Systeme sind beispielsweise aus der US-A-2004/249682, der US-A-2002/152429, der WO-A-00/52553, der US-A-2006/161541 und der US-A-2003/041280 bekannt.

Die in einem dem Proxy-Server zugeordneten flüchtigen Speicher hinterlegten Datenbankanfragen und deren Ergebnissen werden abhängig von der Kapazität des flüchtigen Speichers und der Frequentierung durch die Benutzer in unregelmäßigen Abständen durch neuere Anfragen ersetzt. Dabei werden die zeitlich ältesten Anfragen aus dem flüchtigen Speicher gelöscht. Dies garantiert einen hinsichtlich des Abfrageprofils der Benutzer möglichst aktuellen flüchtigen Speicher.

Die in einem flüchtigen Speicher hinterlegten Informationen gehen funktionsbedingt nach einem Systemausfall der Kontrolleinheit beziehungsweise bei einem Neustart dieser verloren. Eine Rekonstruktion der hinterlegten Datenbankabfragen und ihrer Ergebnisse ist daher nicht möglich. Ein Sichern des gesamten flüchtigen Speichers um diesen Datenverlust zu vermeiden ist aufgrund der üblichen Größe und dem damit verbundenen Aufwand hinsichtlich der benötigten Systemressourcen, die auf Kosten der Benutzeranbindung geht, nicht praktikabel.

Des Weiteren wird nach einem Neustart der Kontrolleinheit der flüchtige Speicher erst sehr langsam nach und nach durch die Anfragen der Benutzer mit Daten gefüllt. Im Idealzustand, wenn der flüchtige Speicher voll gefüllt ist, werden Datenzugriffe fast ausschließlich aus dem flüchtigen Speicher bedient, und die Zugriffe auf die Datenbank können vernachlässigt werden. Bis dieser Idealzustand nach einem Neustart des Systems bzw. des Proxy-Servers erreicht wird, ist die Leistungsfähigkeit für die Anwender eingeschränkt, da Anfragen nicht über den flüchtige Speicher beantwortet werden können sondern zeitintensiv und unter Erhöhung der Netzlast durch Kontaktierung der Datenbank abgearbeitet werden müssen.

Der Erfindung liegt daher die Aufgabe zugrunde, ein Verfahren für den Betrieb eines Proxy-Servers mit einem flüchtigen Speicher anzugeben, bei dem auch nach einem Systemausfall besonders zügig auf vorherige Ergebnisse aus dem flüchtigen Speicher zurückgegriffen werden kann.

Diese Aufgabe wird erfindungsgemäß dadurch gelöst, dass die im flüchtigen Speicher hinterlegten Anfragen wiederkehrend in einem nicht flüchtigen Sicherungsspeicher gesichert werden.

Die Erfindung geht dabei von der Überlegung aus, dass für eine Rekonstruktion des flüchtigen Speichers nach einem Systemausfall es möglich sein sollte, seinen Inhalt vor dem Systemausfall aus einem nicht flüchtigen Sicherheitsspeicher einzulesen. Um einen möglichst aktuellen Stand des flüchtigen Speichers zu erhalten, wird der Inhalt des flüchtigen Speichers bevorzugt wiederkehrend im nichtflüchtigen Speicher hinterlegt. Zur Begrenzung des Aufwandes sollte aber selektiv derart gespeichert werden, dass eine Rekonstruktion mit minimaler Datenmenge möglich ist. Da die den Anfragen zugeordneten Ergebnisse in der Datenbank hinterlegt sind, eignet sich zur vollständigen Rekonstruktion des flüchtigen Speichers eine Beschränkung der Sicherung des flüchtigen Speichers auf die Benutzeranfragen. Daher werden nur die im flüchtigen Speicher hinterlegten Anfragen wiederkehrend in einem nicht flüchtigen Sicherungsspeicher hinterlegt.

Vorteilhafterweise werden die Anfragen in den nicht flüchtigen Sicherungsspeicher in zeitlich regelmäßigen Abständen gesichert. Diese sollten der Frequentierung der Datenbank durch die Benutzer und des flüchtigen Speichers durch den Proxy-Server geeignet angepasst werden. Bei der Sicherung der Anfragen sollte ein Mittelweg zwischen der Notwendigkeit zur Aktualität der im flüchtigen Speicher hinterlegten Anfragen und der zusätzlichen Netzbelastung gefunden werden.

Die im Sicherheitsspeicher hinterlegten Benutzeranfragen können dabei verwendet werden, den flüchtigen Speicher zu füllen. Dazu wird bei einem Neustart der Kontrolleinheit in vorteilhafterweise die zeitlich letzte Sicherung der Anfragen aus dem nicht flüchtigen Speicher in den flüchtigen Speicher eingelesen. Dies ermöglicht ein möglichst schnelles Füllen des flüchtigen Speichers. Um die für den Benutzer gewohnte Funktionalität des flüchtigen Speichers zu erreichen, werden in weiterer vorteilhafter Weise die aus der letzten Sicherung eingelesenen Datenbankanfragen ausgeführt und die Ergebnisse im flüchtigen Speicher hinterlegt. Dadurch wird der Idealzustand des flüchtigen Speichers nach Neustart der Kontrolleinheit zügig erreicht und die Netzlast bei Datenbankanfragen der Benutzer durch die Möglichkeit des Auslesens der Ergebnisse auf dem flüchtigen Speicher vermindert.

Damit das Sichern der Anfragen in einem nicht flüchtigen Sicherungsspeicher, das Einlesen der Anfragen und die Ausführung nach einem Neustart der Kontrolleinheit nicht zu Einbußen in der Geschwindigkeit bei Datenbankanfragen der Benutzer führen, werden in vorteilhafter Weise diese Vorgänge mit niedriger Priorität im Vergleich zu anderen parallel laufenden Benutzeranwendungen verarbeitet. Dies garantiert einen zuverlässigen Betrieb des Proxy-Servers, ohne wesentliche Beeinträchtigung der Arbeitsabläufe durch die Weiderherstellung des Inhaltes des flüchtigen Speichers.

Die mit der Erfindung erzielten Vorteile bestehen insbesondere darin, dass durch die wiederkehrende Sicherung der Benutzeranfragen in einem nicht flüchtigen Speicher nach einem Neustart des Proxy-Servers der ihm zugeordnete flüchtige Speicher nicht nach und nach durch Benutzeranfragen gefüllt werden muss, sondern relativ zügig in einen Zustand kurz vor dem Runterfahren des Proxy-Servers zurückversetzt werden kann. Daher werden Datenbankanfragen schon relativ kurz nach dem Neustart des Proxy-Servers in gewohnter Schnelligkeit abgearbeitet.

Ein Ausführungsbeispiel der Erfindung wird anhand einer Zeichnung näher erläutert. Darin zeigen:
- Fig. 1: schematisch ein Datenbanksystem,
- Fig. 2: ein Diagramm über die zeitlichen Zugriffe auf einen flüchtigen Speicher im Idealzustand, und
- Fig. 3: ein Diagramm über die zeitlichen Zugriffe auf einen flüchtigen Speicher nach Neustart der Kontrolleinheit.

Gleiche Teile sind in allen Figuren mit denselben Bezugszeichen versehen.

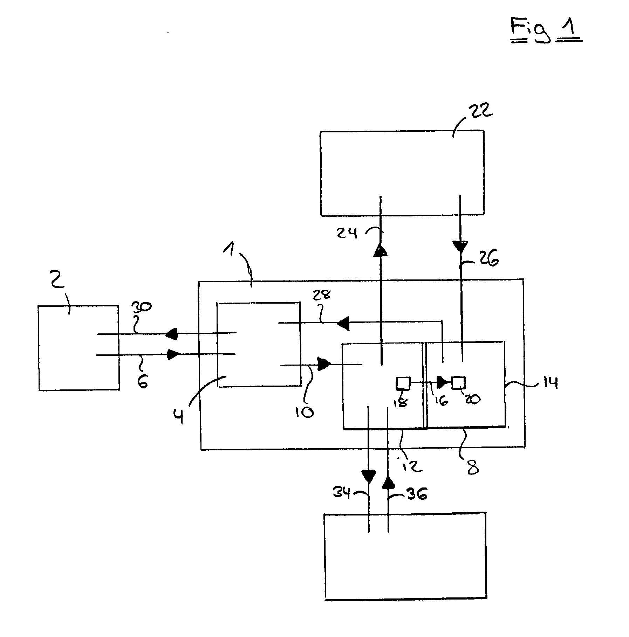

Das Datenbanksystem 1 gemäß Figur 1 umfasst eine Kontrolleinheit 2, die mit einem Client oder Benutzer 3 verbunden ist. Die vom Benutzer 3 verfassten Datenbankanfragen werden dabei direkt an ein in der Kontrolleinheit 2 angeordneten Proxy-Server 4 über eine Verbindung, welche in Figur 1 durch einen Pfeil 6 dargestellt wird, gesendet. Der Proxy-Server 4 ist mit einem flüchtigen Speicher 8 verbunden, wobei diese Verbindung in der Figur 1 durch den Pfeil 10 symbolisiert wird. Der flüchtige Speicher beinhaltet zum einen einen Anfragenbereich 12, in dem vom Benutzer 3 gestellte Datenbankanfragen gesichert werden, und einen Ergebnisbereich 14, in dem die den Anfragen entsprechenden Ergebnisse gespeichert werden. Dabei existiert ein Verweis, dargestellt durch den Pfeil 16, von einer Anfrage, dargestellt durch ein kleines Quadrat 18 aus dem Anfragenbereich 12 auf ihr Ergebnis, dargestellt durch ein kleines Quadrat 20, aus dem Ergebnisbereich 14.

Der flüchtige Speicher 8 steht in Kontakt mit einer Datenbank 22 die Benutzeranfragen aus dem Anfragenbereich 12 des flüchtigen Speichers 8 empfängt, wobei dieser Kontakt durch einen Pfeil 24 symbolisiert ist. Die Ergebnisse dieser Anfrage werden dann an den flüchtigen Speicher 8 zurück gesendet, dargestellt durch den Pfeil 26, und im Ergebnisbereich 14 des flüchtigen Speichers 8 hinterlegt.

Die von einem Benutzer 3 an die Kontrolleinheit 2 gestellten Datenbankanfragen werden vom Proxy-Server 4 entgegengenommen, wobei dieser den Anfragenbereich 12 des flüchtigen Speichers 8 dahingehend überprüft, ob diese Datenbankanfrage mit einem Verweis auf ihr Ergebnis bereits im flüchtigen Speicher 8 hinterlegt ist. Ist dies der Fall, wird das Ergebnis an den Proxy-Server vermittelt, dargestellt durch den Pfeil 28, welcher das Ergebnis an den Benutzer 3 weiterleitet, dargestellt durch den Pfeil 30. Da dies ohne Kontaktierung der Datenbank 22 erfolgt und der flüchtige Speicher 8 üblicherweise eine schnellere Datenanbindung als die Bearbeitung über die Datenbank 22 liefert, erhöht dies die Geschwindigkeit, mit der die Anfragen des Benutzers 3 beantwortet werden. Liegt diese Anfrage im Anfragenbereich 12 des flüchtigen Speichers 8 nicht vor, wird die Datenbank 22 kontaktiert und das von ihr zurück gesandte Ergebnis im Ergebnisbereich 14 des flüchtigen Speichers 8 mit einem Verweis von der Anfrage auf das Ergebnis hinterlegt.

Ein nicht flüchtiger Speicher 32, der lokal von der Kontrolleinheit 2 getrennt sein kann, aber auch in ihr integriert sein könnte, hat die Möglichkeit, auf den Anfragebereich 12 des flüchtigen Speichers 8 zuzugreifen. Dadurch können die im Anfragebereich 12 hinterlegten Anfragen im nicht flüchtigen Speicher 32 gesichert werden, dargestellt durch einen Pfeil 34, oder aber auch die im nicht flüchtigen Speicher 32 gesicherten Anfragen in den Anfragebereich 12 des flüchtigen Speichers 8 geschrieben werden, dargestellt durch einen Pfeil 36.

Die im nicht flüchtigen Speicher 32 hinterlegten Datenbankanfragen aus dem Anfragebereich 12 des flüchtigen Speichers 8 können zur Auswertung der Anfragen und damit zur Erstellung und Analyse von Anfrageprofilen herangezogen werden, da sie im Gegensatz zum Anfragebereich 12 des flüchtigen Speichers 8 nicht stetigen Veränderungen unterworfen sind und auch bei einem Neustart der Kontrolleinheit 2 vorhanden sind. Dies ermöglicht auch, den nach einem Neustart der Kontrolleinheit 2 zunächst leeren flüchtigen Speicher 8 zügig und automatisch zu füllen.

Damit wird erreicht, dass auch nach einem Neustart der Kontrolleinheit 2 zügig der flüchtige Speicher 8 mit den benutzerspezifischen Datenbankanfragen gefüllt ist und daher auch die Kontrolleinheit 2 schnell wieder die gewohnte Geschwindigkeit und die Entlastung des Netzes liefert.

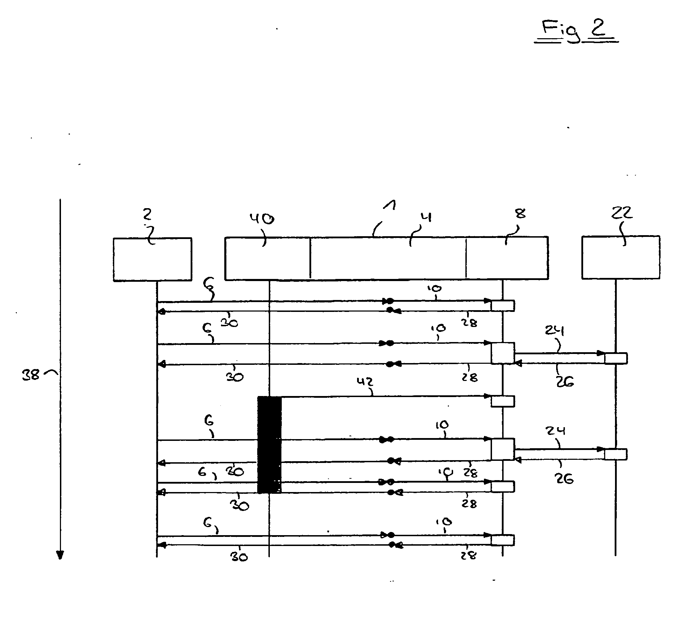

In Figur 2 ist der zeitliche Verlauf mehrer Datenbankanfragen und die Sicherung der Datenbankanfragen in einem nicht flüchtigen Speicher 8 während des normalen Betriebes der Kontrolleinheit 2 dargestellt. Der zeitliche Ablauf wird dabei durch eine Zeitachse 38 dargestellt. Eine vom Benutzer 3 gestellte Anfrage wird über den Proxy-Server 4 an den flüchtigen Speicher 8 gesendet, symbolisiert durch die Pfeile 6 und 10, und, sofern die Anfrage und ihr Ergebnis bereits im flüchtigen Speicher 8 hinterlegt sind, von ihm beantwortet und das Ergebnis an den Benutzer 3 zurück gesendet wird, dargestellt durch die Pfeile 28 und 30. Sollte die Anfrage nicht im flüchtigen Speicher 8 hinterlegt sein, wird die Datenbank 22 kontaktiert, dargestellt durch den Pfeil 24, und das Ergebnis an den flüchtigen Speicher 8 zurückgesendet, dargestellt durch den Pfeil 26. Erst dann kann das Ergebnis an den Benutzer 3 gesendet werden. Dies hat zur Folge, dass zum einen die Netzlast der Datenbankanbindung erhöht wird und zum anderen der Benutzer 3 länger auf das Ergebnis warten muss.

In zeitlich wiederkehrenden Abständen greift dabei eine Sicherungseinheit 40 auf den flüchtigen Speicher 8 zu, dargestellt durch den Pfeil 42, und sichert die im flüchtigen Speicher 8 hinterlegten Benutzeranfragen in einem nicht flüchtigen Speicher. Damit während dieser Sicherung die Anfragen vom Benutzer 3 weiterhin und im gleichen Zeitraum ausgeführt und beantwortet werden, wird der Zugriff der Sicherungseinheit 40 auf den flüchtigen Speicher 8 mit einer niedrigen Priorität ausgeführt.

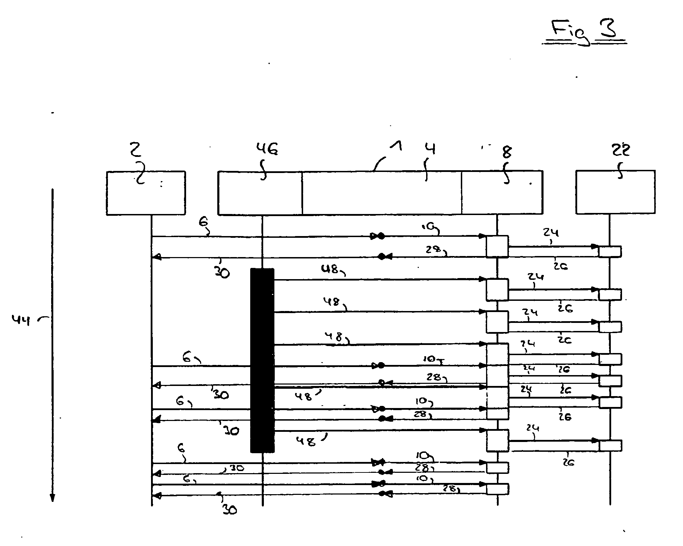

In Figur 3 ist der zeitliche Verlauf mehrer Datenbankanfragen und das Einlesen der Datenbankanfragen aus dem nicht flüchtigen Speicher 8 kurz nach dem Neustart der Kontrolleinheit 2 dargestellt. Wie auch in Figur 2 wird der zeitliche Ablauf durch eine Zeitachse 44 dargestellt. Da nach Neustart der Kontrolleinheit 2 im flüchtigen Speicher 8 noch keine Anfragen hinterlegt sind, müssen alle vom Benutzer 3 gestellten Anfragen aus der Datenbank 22 heraus beantwortet werden. Da dies für den Benutzer 3 sehr zeitaufwendig ist, werden von einer Schreibeeinheit 46 die in einem nicht flüchtigen Speicher hinterlegten Datenbankanfragen, welche vor dem Neustart der Kontrolleinheit 2 aus dem flüchtigen Speicher 8 dort hinterlegt wurden, nach und nach in den zunächst leeren flüchtigen Speicher 8 geschrieben, dargestellt durch den Pfeil 48. Durch diese Anfragen wird anschließend die Datenbank 22 kontaktiert und das Ergebnis an den flüchtigen Speicher 8 zurück gesendet und dort hinterlegt.

Da durch dieses Verfahren der flüchtige Speicher 8 zügig wieder gefüllt wird, können schon kurz nach dem Neustart der Kontrolleinheit 2 die Anfragen eines Benutzers 3 wieder aus dem flüchtigen Speicher 8 heraus beantwortet werden, ohne dass die Datenbank 22 kontaktiert werden müsste. Die Netzlast bei der Kontaktierung der Datenbank wird damit zügig wieder gesenkt und ein Benutzer 3 erhält auch kurz nach Neustart der Kontrolleinheit 2 wieder in gewohnter Geschwindigkeit seine Ergebnisse.

### Bezugszeichenliste

- 1: Datenbanksystem
- 2: Kontrolleinheit
- 3: Benutzer
- 4: Proxy-Server
- 6: Pfeil
- 8: flüchtiger Speicher
- 10: Pfeil
- 12: Anfragenbereich
- 14: Ergebnisbereich
- 16: Pfeil
- 18,20: kleine Quadrate
- 22: Datenbank
- 24,26,28,30: Pfeile
- 32: nicht flüchtiger Speicher
- 34,36: Pfeile
- 38: Zeitachse
- 40: Sicherungseinheit
- 42: Pfeil
- 44: Zeitachse
- 46: Schreibeeinheit
- 48: Pfeil

## Patentansprüche

1. Verfahren zum Ermitteln von Informationen aus einer Datenbank (22), die in Form von von einem Benutzer (3) vorgebbaren Anfragen zugeordneten Anfrageergebnissen in einem flüchtigen Speicher (8) einer Kontrolleinheit (2) zum Auslesen durch den Benutzer (3) bereitgehalten werden, wobei die bearbeiteten Anfragen gemeinsam mit einem Verweis auf die ihnen zugeordneten Ergebnisse ebenfalls im flüchtigen Speicher (8) vorgehalten werden, **dadurch gekennzeichnet, dass** nur die im flüchtigen Speicher (8) hinterlegten Anfragen wiederkehrend in einem nicht flüchtigen Sicherungsspeicher (32) gesichert werden.

2. Verfahren nach Anspruch 1, bei die Anfragen in zeitlich regelmäßigen Abständen gesichert werden.

3. Verfahren nach Anspruch 1 oder 2, bei dem bei einem Neustart der Kontrolleinheit (2) die zeitlich letzte Sicherung der Anfragen in den flüchtigen Speicher (8) eingelesen werden.

4. Verfahren nach Anspruch 3, bei dem die eingelesenen Anfragen ausgeführt werden und die Ergebnisse im flüchtigen Speicher (8) hinterlegt werden.

5. Verfahren nach einem der Ansprüche 1 bis 4, bei dem die einzelnen Verfahrensschritte mit einer im Vergleich zu einer anderen Benutzeranwendung niedrigeren Priorität geschieht.

## Claims

1. A method for determining information from a data base (22), said information being kept available in the form of inquiry results associated with inquiries defined by a user (3) in a volatile storage (8) of a control unit (2), to be read out by the user (3), the processed inquiries also being stored in the volatile storage (8), together with a reference to the results associated with them, **characterized in that** only the inquiries stored in the volatile storage (8) are recurrently saved in a non-volatile backup storage (32).

2. The method of claim 1, wherein the inquiries are saved at regular temporal intervals.

3. The method of claim 1 or 2, wherein upon a restart of the control unit (2), the temporally last saving of the inquiries is read into the volatile storage (8).

4. The method of claim 3, wherein the inquiries read in are executed and the results are stored in the volatile storage (8).

5. The method of any of claims 1 to 4, wherein the individual method steps are carried out with a priority which is lower than that of another user application.

## Revendications

1. Procédé pour déterminer des informations à partir d'une base de données (22), dites informations étant tenues prêtes sous forme de résultats de requêtes affectés à des requêtes définies par un utilisateur (3) dans une mémoire volatile (8) d'une unité de contrôle (2), à être lues par l'utilisateur (3), les requêtes traitées étant également mémorisées dans la mémoire volatile (8), ensemble avec une référence aux résultats y affectés, **caractérisé en ce que** seulement les requêtes mémorisées dans la mémoire volatile (8) sont sauvegardées de manière recurrente dans une mémoire non volatile de sauvegarde (32).

2. Procédé selon la revendication 1, dans lequel les requêtes sont sauvegardées à des intervalles temporels réguliers.

3. Procédé selon la revendication 1 ou 2, dans lequel, lors d'un redémarrage de l'unité de contrôle (2), la dernière sauvegarde, du point de vue temporel, des requêtes est lue dans la mémoire volatile (8).

4. Procédé selon la revendication 3, dans lequel les requêtes lues sont exécutées et les résultats sont mémorisés dans la mémoire volatile (8).

5. Procédé selon l'une quelconque des revendications 1 to 4, dans lequel les pas individuels du procédé sont effectués avec une priorité plus basse que celle d'une autre application d'utilisateur.
